# EUROPÄISCHE PATENTANMELDUNG

(11) **EP 4 227 798 A1**
(43) Veröffentlichungstag der Anmeldung: **16.08.2023**
(21) Anmeldenummer: 22156444.6
(22) Anmeldetag: 11.02.2022
(51) Int. Cl.: G06F 8/65, G06F 8/71, G05B 19/418

(54) **VERWALTUNG UND SPEICHERUNG VON INFORMATIONEN**

(71) Anmelder: Siemens Aktiengesellschaft, 80333 München (DE)
(72) Erfinder: Leistner, Tim, 76135 Karlsruhe (DE); Meilland, Gerald, 67630 Lauterbourg (FR); Milvich, Michael, 68753 Waghäusel (DE); Oechsle, Rainer, 76185 Karlsruhe (DE)
(74) Vertreter: Siemens Patent Attorneys

(57) **Zusammenfassung**

Vorgeschlagen wird ein Projektierungswerkzeug (11) für ein Leitsystem einer Prozess- oder Fertigungsanlage, welches Projektierungswerkzeug (11) auf einem Engineering Station Server (2) computerimplementierbar ist, wobei durch das Projektierungswerkzeug (11) eine computerimplementierte Stammprojektierung (12) für eine Automatisierung der Prozess- oder Fertigungsanlage erstellbar und veränderbar ist, welche Stammprojektierung (12) eine Mehrzahl von computerimplementierten Bausteinen aufweist, die jeweils Automatisierungsinformationen für eine oder mehrere Komponenten der Prozess- oder Fertigungsanlage umfassen, und wobei durch wenigstens einen ersten Nutzer eine erste Kopie (13a) und durch wenigstens einen zweiten Nutzer eine zweite Kopie (13b) der Stammprojektierung (12) in einer jeweiligen Nutzersitzung erstellbar und in der jeweiligen Nutzersitzung veränderbar sind, wobei die Stammprojektierung (12) vollständig oder in Teilen kompilierbar und auf ein Automatisierungsgerät (4) der Prozess- oder Fertigungsanlage übertragbar ist. Das Projektierungswerkzeug (11) ist dadurch gekennzeichnet, dass es dazu ausgebildet ist, für jeden computerimplementierten Baustein Informationen darüber, ob der jeweilige Baustein der Stammprojektierung (12) zum Kompilieren und Übertragen vorgesehen ist oder ob der jeweilige Baustein der Stammprojektierung (12) bereits kompiliert und auf das Automatisierungsgerät (4) übertragen worden ist, von der Stammprojektierung (12) an eine Datenbank (16), die außerhalb der Stammprojektierung (12) und der Nutzersitzungen implementiert ist, zu übertragen, wobei es dazu ausgebildet ist, die Informationen aus der Datenbank (16) in die jeweilige Nutzersitzung des ersten Nutzers und des zweiten Nutzers zu übertragen, um einen Abgleich zwischen der Datenbank (16) und den Nutzersitzungen zu bewirken, wobei das Projektierungswerkzeug (11) dazu ausgebildet ist, die Informationen dem ersten Nutzer und dem zweiten Nutzer jeweils innerhalb deren Nutzersitzung visuell darzubieten.

## Beschreibung

Die Erfindung betrifft ein Projektierungswerkzeug für ein Leitsystem einer Prozess- oder Fertigungsanlage. Außerdem betrifft die Erfindung einen Engineering Station Server für ein Leitsystem einer Prozess- oder Fertigungsanlage, ein Leitsystem für eine Prozess- oder Fertigungsanlage und eine Verwendung eines Projektierungswerkzeuges zum Erstellen einer Automatisierung für eine Prozess- oder Fertigungsanlage.

Bei einem Betrieb einer automatisierten technischen Anlage unterscheidet man zwischen der reale technische Anlage und einem digitalen, virtuellen Abbild der realen technischen Anlage. Um die Automatisierung der realen technischen Anlage zu erstellen, kann ein computerimplementiertes Entwurfswerkzeug zum Einsatz kommen, welches Teil eines Leitsystems ist, das neben dem Entwurfswerkzeug wenigstens noch Mittel zum Bedienen und Beobachten der technischen Anlage umfasst.

Ein beispielhaftes computerimplementiertes Entwurfswerkzeug eines Leitsystems ist in der DE 198 80 479 B4 beschrieben. Auch die DE 10 013 037 A1 zeigt eine Projektierung einer Automatisierung für eine technische Anlage.

Es ist bekannt, mit mehreren Nutzern (Projekteuren) gleichzeitig an einem Automatisierungsprojekt in einem computerimplementierten Entwurfswerkzeug zu arbeiten, um speziell bei komplexeren technischen Anlage die Arbeitslast auf mehrere Nutzer verteilen zu können. Jeder Nutzer arbeitet dabei in einer eigenen Sitzung (engl. Session). Eine solche Sitzung wird durch Kopieren eines übergeordneten Stammprojektes erzeugt. Die durch einen Nutzer an der Kopie des Stammprojektes vorgenommenen Änderungen werden zunächst nur lokal in der jeweiligen Sitzung bzw. Session vorgenommen. In einem speziellen Abgleichverfahren, das auch "Publish" genannt wird, können die lokalen Änderungen auf das Stammprojekt übertragen und so den anderen Nutzern zugänglich gemacht werden.

Wenn ein Nutzer die am Stammprojekt von einem anderen Nutzer vorgenommenen Änderungen in seiner lokalen Kopie des Stammprojektes Projekt übernehmen möchte, kann der Nutzer ein Update seiner Kopie durchführen (entweder aktiv durch eine entsprechende Befehlseingabe oder passiv durch eine regelmäßige Aktualisierung der lokalen Kopie). Bei diesem bekannten Verfahren existieren unterschiedliche Versionen des Stammprojektes in den verschiedenen Sitzungen/Sessions der einzelnen Nutzer. Für jede Version kann es dabei eine sogenannte Revisionsnummer geben, wobei eine höhere Revisionsnummer bedeuten kann, dass der jeweilige Projektstand in der Sitzung/Session aktueller ist.

Um die Automatisierungsinformationen aus dem computerimplementierten Entwurfswerkzeug auf die Geräte der realen technischen Anlage zu laden, ist es bekannt, einen speziellen Download-Mechanismus zu verwenden. Dabei müssen nicht alle in dem Stammprojekt enthaltenen Objekte auf ein Gerät geladen werden. Die Information, ob ein Objekt geladen ist oder nicht, wird in sogenannten Ladezuständen gespeichert. Die Ladezustände der Objekte sollen den Nutzern in einer Benutzeroberfläche des computerimplementierten Entwurfswerkzeuges angezeigt werden.

Durch den Abgleich der einzelnen Kopien der Nutzer mit dem Stammprojekt und von den einzelnen Nutzern angestoßenem Laden der aktuellen Automatisierungen für die Geräte kommt es regelmäßig dazu, dass sich die Ladezustände für die einzelnen in den Kopien der Stammprojektierung verwendeten Objekte voneinander unterscheiden.

Eine Lösung für dieses Problem würde in einem häufigen Abgleich des Stammprojektes mit den einzelnen Kopien des Stammprojektes liegen. Dabei ist jedoch aufgrund der, speziell bei größeren technischen Anlage beträchtlichen Größe der Projekte eine nicht zu vernachlässigende Performanzverringerung verbunden, was für eine Verfügbarkeit der technischen Anlage zur Gefahr werden kann.

Der Erfindung liegt die Aufgabe zugrunde, ein computerimplementiertes Entwurfswerkzeug für ein Leitsystem für eine Prozess- oder Fertigungsanlage anzugeben, welches einen effizienten, aufwandsarmen Abgleich der Ladezustände einzelner Objekte einer Stammprojektierung zwischen einzelnen Kopien der Stammprojektierung ermöglicht.

Diese Aufgabe wird gelöst durch ein Projektierungswerkzeug für ein Leitsystem einer Prozess- oder Fertigungsanlage mit den Merkmalen des Anspruchs 1. Außerdem wird die Aufgabe gelöst durch einen Engineering Station Server für ein Leitsystem einer Prozess- oder Fertigungsanlage gemäß Anspruch 7. Zudem wird die Aufgabe gelöst durch eine Verwendung eines Projektierungswerkzeugs gemäß Anspruch 10. Vorteilhafte Weiterbildungen ergeben sich aus den abhängigen Ansprüchen.

Ein erfindungsgemäßes Projektierungswerkzeug für ein Leitsystem einer Prozess- oder Fertigungsanlage ist auf einem Engineering Station Server computerimplementierbar, wobei durch das Projektierungswerkzeug eine computerimplementierte Stammprojektierung für eine Automatisierung der Prozess- oder Fertigungsanlage erstellbar und veränderbar ist, welche Stammprojektierung eine Mehrzahl von computerimplementierten Bausteinen aufweist, die jeweils Automatisierungsinformationen für ein oder mehrere Komponenten der Prozess- oder Fertigungsanlage umfassen, und wobei durch wenigstens einen ersten Nutzer eine erste Kopie und durch wenigstens einen zweiten Nutzer eine zweite Kopie des Stammprojektes in einer jeweiligen Nutzersitzung erstellbar und in der jeweiligen Nutzersitzung veränderbar sind wobei die Stammprojektierung vollständig oder in Teilen kompilierbar und auf ein Automatisierungsgerät der Prozess- oder Fertigungsanlage übertragbar ist.

Das erfindungsgemäße Projektierungswerkzeug ist dadurch gekennzeichnet, dass es dazu ausgebildet ist, für jeden computerimplementierten Baustein Informationen darüber, ob der jeweilige Baustein des Stammprojektes zum Kompilieren und Übertragen vorgesehen ist oder ob der jeweilige Baustein des Stammprojektes bereits kompiliert und auf das Automatisierungsgerät übertragen worden ist, von dem Stammprojekt an eine Datenbank, die außerhalb des Stammprojektes und der Nutzersitzungen implementiert ist, zu übertragen, wobei das Projektierungswerkzeug dazu ausgebildet ist, die Informationen aus der Datenbank in die jeweilige Nutzersitzung des ersten Nutzers und des zweiten Nutzers zu übertragen, um einen Abgleich zwischen der Datenbank und den Nutzersitzungen zu bewirken, wobei das Projektierungswerkzeug dazu ausgebildet ist, die Informationen dem ersten Nutzer und dem zweiten Nutzer jeweils innerhalb deren Nutzersitzung visuell darzubieten.

Bei der Prozessanlagenlage kann es sich um eine Anlage aus der Prozessindustrie wie beispielsweise eine chemische, pharmazeutische, petrochemische oder eine Anlage aus der Nahrungs- und Genussmittelindustrie handeln. Fertigungsanlage können sämtliche Anlagen aus der Produktionsindustrie wie Werke, in denen z.B. Autos oder Güter aller Art produziert werden, sein. Diese Anlagen können über ein Leitsystem oder zumindest ein computerunterstütztes Modul zur Steuerung und Regelung des ablaufenden Prozesses oder der Produktion verfügen.

Das Projektierungswerkzeug ist in an sich bekannter Weise dazu ausgebildet, eine (Stamm-)Projektierung für eine Automatisierung einer Prozess- oder Fertigungsanlage zu erzeugen. Ohne sich hierauf zu beschränken, kann es sich bei dem Projektierungswerkzeug beispielsweise um den SIMATIC Manager der Firma Siemens handeln, welcher im Kontext des Prozessleitsystems SIMATIC PCS 7 zum Einsatz kommen kann.

Die Stammprojektierung umfasst dabei in an sich bekannter Weise alle für einen automatisierten Betrieb einer Prozessoder Fertigungsanlage benötigten technischen Angaben wie eine Steuerung oder eine Regelung für Komponenten der Prozessoder Fertigungsanlage. Diese technischen Aufgaben werden vorliegende auch als Automatisierungsinformationen bezeichnet. Die für die Automatisierung relevanten Daten der Stammprojektierung können vollständig oder auch nur in Teilen (im Rahmen eines sogenannten "Delta-Ladens") kompiliert und auf ein Automatisierungsgerät der Prozess- oder Fertigungsanlage übertragen/geladen werden. "Kompiliert" bedeutet dabei, dass mehr oder weniger generische Software-Funktionen an die speziellen Anforderungen des jeweiligen Automatisierungsgerätes angepasst werden. Automatisierungsgeräte werden dabei zur Realisierung einer Automatisierung benutzt und können beispielsweise speicherprogrammierbare Steuerungen oder Leitsysteme sein, die eine übergeordnete Steuerungsfunktion für untergeordnete speicherprogrammierbare Steuerungen darstellen.

Das Projektierungswerkzeug unterstützt eine Bedienung durch eine Mehrzahl von Nutzern (sogenannten Projekteuren); man spricht in diesem Zusammenhang auch von einem Multi-User Betrieb. Wenigstens ein erster Nutzer und ein zweiter Nutzer können sich in dem Projektierungswerkzeug (lokale) Kopien der Stammprojektierung erzeugen lassen, die sie dann unabhängig voneinander bearbeiten können. Dabei können die Nutzer Änderungen an einzelnen computerimplementierten Bausteinen vornehmen, welche jeweils Automatisierungsinformationen für eine oder mehrere Komponenten der Prozess- oder Fertigungsanlage umfassen. Eine solche Komponente kann beispielsweise ein Motor, eine Pumpe, ein Ventil oder dergleichen sein.

Das Projektierungswerkzeug ist dazu ausgebildet, für jeden computerimplementierten Baustein Informationen darüber, ob der jeweilige Baustein der Stammprojektierung zum Kompilieren und Übertragen vorgesehen ist oder ob der jeweilige Baustein der Stammprojektierung bereits kompiliert und auf das Automatisierungsgerät übertragen worden ist, von der Stammprojektierung an eine Datenbank, die außerhalb der Stammprojektierung und der Nutzersitzungen implementiert ist, zu übertragen. Die Informationen können auch als "Ladezustand" bezeichnet werden. Dieser Ladezustand kann die beiden Werte "Baustein ist für das Kompilieren und Übertragen vorgesehen" und "Baustein wurde bereits kompiliert und übertragen" aufweisen.

Der Ladezustand eines Bausteins ändert sich, wenn ein Nutzer eine Änderung an einem Baustein innerhalb seiner lokalen Nutzersitzung vorgenommen hat und diese Änderung an die Stammprojektierung übertragen hat; in diesem Zusammenhang spricht man von einer "Publish"-Aktion, die der Nutzer angestoßen hat. Die von dem Nutzer vorgenommene Änderung an dem Baustein muss kompiliert und auf das Automatisierungsgerät übertragen werden, weshalb der Ladezustand hierbei den Wert "Baustein ist für das Kompilieren und Übertragen vorgesehen" einnimmt. Wenn der Baustein aus der Stammprojektierung heraus kompiliert und an das Automatisierungsgerät übertragen wurde, nimmt der Ladezustand den Wert "Baustein wurde bereits kompiliert und übertragen" ein.

Diese Informationen bzw. den Ladezustand werden von dem Projektierungswerkzeug, im Gegensatz zu bislang bekannten Projektierungswerkzeugen, separat, d.h. außerhalb der Stammprojektierung, hinterlegt. Dies bringt den bedeutenden Vorteil mit sich, dass das Projektierungswerkzeug nicht jedes Mal, wenn ein Nutzer sich über den aktuellen Ladezustand eines Bausteins informieren möchte, die gesamte Stammprojektierung in die lokalen Nutzersitzungen übertragen muss, was einen deutlichen Mehraufwand mit sich bringen würde.

Die Datenbank kann auf dem Engineering Station Server selbst implementierbar sein, um Zugriffs- und Datentransferzeiten zu minimieren. Auch eine Implementierung in einer cloudbasierten Umgebung ist möglich. Die Datenbank kann aber prinzipiell an einem beliebigen Speicherort implementiert sein - unter der Voraussetzung, dass dieser von dem Projektierungswerkzeug aus erreichbar ist.

Die Informationen über den Ladezustand der Bausteine können dem Nutzer von dem Projektierungswerkzeug in Reaktion auf eine dahingehende Anforderung durch den Nutzer bereitgestellt werden. Der Nutzer kann sich demnach manuell, d.h. "on demand", die aktuellen Ladezustände der in dem Stammprojekt verwendeten Bausteine bereitstellen lassen.

Alternativ oder zusätzlich können die Informationen über den Ladezustand der Bausteine dem jeweiligen Nutzer in definierbaren zeitlichen Abständen (beispielsweise alle 10 Minuten) automatisch durch das Projektierungswerkzeug bereitgestellt werden. Dadurch kann effektiv verhindert werden, dass der Nutzer versehentlich nicht die aktuellen Ladezustände der Bausteine abruft.

Im Rahmen einer vorteilhaften Weiterbildung der Erfindung ist das Projektierungswerkzeug dazu ausgebildet, dem ersten Nutzer die Veränderung eines Bausteins, der zuvor von dem zweiten Nutzer verändert worden ist, solange zu verweigern, bis der zweite Nutzer die vorgenommene Änderung auf das Stammprojekt übertragen hat und der erste Nutzer eine aktualisierte Kopie des Stammprojektes als erste Kopie verwendet. Dadurch kann verhindert werden, dass mehrere Nutzer zugleich Änderungen an demselben Baustein vornehmen, was zu Konsistenzproblemen führen könnte.

Besonders bevorzugt ist das Projektierungswerkzeug dazu ausgebildet, den in die Datenbank zu übertragenden Informationen eine aktuelle Revisionsnummer des Stammprojektes hinzuzufügen. Dabei ist das Projektierungswerkzeug dazu ausgebildet, veraltete, nicht mehr benötigte Informationen aus der Datenbank zu löschen. Hierzu sei auf die Beschreibung des Ausführungsbeispiel verwiesen.

Bevorzugt wird jedes Mal, wenn neue Informationen an die Datenbank übertragen werden (aufgrund einer dem Stammprojekt bekannt gemachten Änderung eines Bausteins durch einen Nutzer oder eines Kompilierens/Übertragens des Stammprojektes an das Automatisierungsgerät), die Revisionsnummer nach einem fortlaufenden System fortgesetzt (beispielsweise eine aufsteigende Nummerierung).

Die zuvor formulierte Aufgabe wird zudem gelöst durch einen Engineering Station Server für ein Leitsystem einer Prozessoder Fertigungsanlage, auf dem ein Projektierungswerkzeug, welches wie zuvor erläutert ausgebildet ist, computerimplementiert ist.

Unter einem "Engineering Station Server" wird vorliegend ein Server verstanden, der dazu ausgebildet ist, verschiedene Hardware- und Software-Projekte für ein die Prozess- oder Fertigungsanlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der Prozess- oder Fertigungsanlage geplant und verwaltet werden. Ein Beispiel hierfür ist ein SIMATIC Manager Server der Firma SIEMENS.

Die Aufgabe wird zudem gelöst durch ein Leitsystem für eine Prozess- oder Fertigungsanlage, welches wenigstens einen Engineering Station Server, der wie zuvor erläutert ausgebildet ist, und ein Automatisierungsgerät umfasst.

Unter einem Leitsystem wird im vorliegenden Kontext ein computergestütztes, technisches System verstanden, das Funktionalitäten zum Darstellen, Bedienen und Leiten der Prozessoder Fertigungsanlage umfasst. Das Leitsystem kann auch Sensoren zur Ermittlung von Messwerten sowie verschiedene Aktoren umfassen. Zudem kann das Leitsystem sogenannte prozessoder fertigungsnahe Komponenten umfassen, die zur Ansteuerung der Aktoren bzw. Sensoren dienen.

Das Leitsystem kann zusätzlich einen Operator Station Server umfassen, auf dem ein Computer-Werkzeug zum Bedienen und Beobachten der automatisierten Prozess- oder Fertigungsanlage durch einen Operator implementiert ist.

Unter einem "Operator Station Server" wird vorliegend ein Server verstanden, der zentral Daten eines Bedien- und Beobachtungssystems sowie in der Regel Alarm- und Messwertarchive des Leitsystems erfasst und Benutzern zur Verfügung stellt. Der Operator Station Server stellt in der Regel eine Kommunikationsverbindung zu Automatisierungssystemen der Prozess- oder Fertigungsanlage her und gibt Daten der Prozessoder Fertigungsanlage an sogenannte Operator Station Clients weiter, die zur Bedienung und Beobachtung eines Betriebs der einzelnen Funktionselemente der Prozess- oder Fertigungsanlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der Prozess- oder Fertigungsanlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Die zuvor formulierte Aufgabe wird zudem gelöst durch eine Verwendung eines Projektierungswerkzeugs, das wie zuvor erläutert ausgebildet ist, zum Erstellen einer Automatisierung für eine Prozess- oder Fertigungsanlage.

Dabei kann die Prozess- oder Fertigungsanlage im Anschluss an die zuvor beschriebene Verwendung auf Grundlage der erstellen Automatisierung betrieben werden.

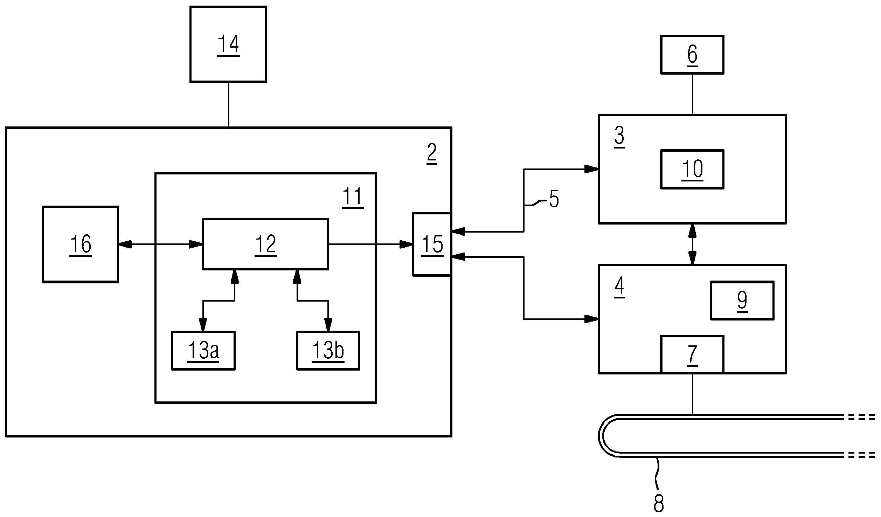

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Leitsystem 1 für eine Prozess- oder Fertigungsanlage schematisch dargestellt. Das Leitsystem 1 umfasst einen Engineering Station Server 2, einen Operator Station Server 3 und ein Automatisierungsgerät 4.

Der Engineering Station Server 2 und der Operator Station Server 3 sind über einen Terminalbus 5 miteinander und optional mit nicht dargestellten weiteren Komponenten des Leitsystems 1 wie einem Archivserver verbunden. Ein Benutzer bzw. Operator kann zum Zwecke des Bedienens und Beobachtens über einen Operator Station Client 6 auf den Operator Station Server 19 zugreifen. Der Terminalbus 5 kann, ohne sich darauf zu beschränken, beispielsweise als Industrial Ethernet ausgebildet sein.

Das Automatisierungsgerät 4 weist eine Schnittstelle 7 auf, die mit einem Anlagenbus 8 verbunden ist. Über diese Schnittstelle 7 kann das Automatisierungsgerät 4 mit Komponenten der Prozess- oder Fertigungsanlage wie Peripheriegeräten (nicht dargestellt) kommunizieren. Der Anlagenbus 8 kann, ohne sich darauf zu beschränken, beispielsweise als Industrial Ethernet ausgebildet sein. Das Automatisierungsgerät 4 kann mit einer beliebigen Anzahl an Subsystemen (nicht dargestellt) verbunden sein.

Der Operator Station Client 6 ist dazu ausgebildet, Anlagenbilder zum Bedienen und Beobachten der Prozess- oder Fertigungsanlage darzustellen, worauf hier aber nicht weiter eingegangen wird.

Das Automatisierungsgerät 4 ist dazu ausgebildet, eine Automatisierung der Komponenten der Prozess- oder Fertigungsanlage zu steuern und zu überwachen. Hierzu ist auf dem Automatisierungsgerät 4 ein Steuerprogramm 9 implementiert, welches im Rahmen einer Projektierung der Automatisierung der Prozess- oder Fertigungsanlage von dem Engineering Station Server 2 auf das Automatisierungsgerät 4 übertragen bzw. geladen worden ist. Das Automatisierungsgerät 4 empfängt Daten (z.B. Messwerte) aus der Prozess- oder Fertigungsanlage und überträgt diese an ein Datenabbild 10 (beispielsweise ein Prozessabbild) auf dem Operator Station Server 3.

Auf dem Engineering Station Server ist ein Projektierungswerkzeug 11 implementiert. In dem Projektierungswerkzeug 1 kann eine (Stamm-)Projektierung 12 durch einen Nutzer (einen sogenannten Projekteur) erstellt werden. Die Stammprojektierung 11 umfasst eine Mehrzahl von computerimplementierten Bausteinen, die jeweils Automatisierungsinformationen für eine oder mehrere Komponenten der Prozess- oder Fertigungsanlage umfassen. Zu dieser Stammprojektierung 12 kann ein erster Nutzer eine erste Kopie 13a und ein zweite Nutzer eine zweite Kopie 13b in einer jeweiligen Nutzersitzung erstellen. Für einen Zugriff auf den Engineering Station Server 2 und die Nutzersitzungen können die Nutzer einen (oder mehrere) Engineer Station Client 14 nutzen. Wenn einer der Nutzer die Bearbeitung seiner lokalen Kopie 13a, 13b abgeschlossen hat, überschreibt er die Stammprojektierung durch seine lokale Kopie der Stammprojektierung odergleicht die Stammprojektierung wenigstens mit der lokalen Kopie ab. Dieser Vorgang wird auch als "Publish"-Vorgang bezeichnet.

Das Projektierungswerkzeug 11 umfasst weiterhin einen Kompilierdienst 15, welcher die Daten der Stammprojektierung 12 kompiliert und den jeweils relevanten Teil auf den Operator Station Server 3 und das Automatisierungsgerät 4 überträgt. Dabei übersetzt der Kompilierdienst 15 in an sich bekannter Weise die generischen Daten der Stammprojektierung 12, um sie an die spezifischen Anforderungen des Operator Station Servers 3 und des Automatisierungsgerätes 4 anzupassen, so dass diese die Daten der Stammprojektierung 12 weiterverarbeiten bzw. verwenden können.

Auf dem Engineering Station Server 2 ist weiterhin eine Datenbank 16 implementiert. Das Projektierungswerkzeug 11 ist dazu ausgebildet, für jeden computerimplementierten Baustein der Stammprojektierung 12 Informationen darüber, ob der jeweilige Baustein der Stammprojektierung 12 zum Kompilieren und Übertragen vorgesehen ist oder ob der jeweilige Baustein der Stammprojektierung 12 bereits kompiliert und auf das Automatisierungsgerät 4 übertragen worden ist, von der Stammprojektierung 12 an die Datenbank 16, die außerhalb der Stammprojektierung 12 und der Nutzersitzungen implementiert ist, zu übertragen. Die Informationen können auch als "Ladezustand" bezeichnet werden. Dieser Ladezustand kann die beiden Werte "Baustein ist für das Kompilieren und Übertragen vorgesehen" und "Baustein wurde bereits kompiliert und übertragen" aufweisen.

Der Ladezustand eines Bausteins ändert sich, wenn ein Nutzer eine Änderung an einem Baustein innerhalb seiner lokalen Nutzersitzung vorgenommen hat und diese Änderung an die Stammprojektierung 12 übertragen hat ("Publish"). Die von dem Nutzer vorgenommene Änderung an dem Baustein muss von dem Kompilierdienst 15 kompiliert und auf das Automatisierungsgerät 4 übertragen werden, weshalb der Ladezustand hierbei den Wert "Baustein ist für das Kompilieren und Übertragen vorgesehen" einnimmt. Wenn der Baustein aus der Stammprojektierung 12 heraus kompiliert und an das Automatisierungsgerät 4 übertragen wurde, nimmt der Ladezustand den Wert "Baustein wurde bereits kompiliert und übertragen" ein.

Diese Informationen bzw. den Ladezustand werden von dem Projektierungswerkzeug 11, im Gegensatz zu bislang bekannten Projektierungswerkzeugen, separat, d.h. außerhalb der Stammprojektierung 12, hinterlegt. Dies bringt den bedeutenden Vorteil mit sich, dass das Projektierungswerkzeug 11 nicht jedes Mal, wenn ein Nutzer sich über den aktuellen Ladezustand eines Bausteins informieren möchte, die gesamte Stammprojektierung 12 in die lokalen Nutzersitzungen übertragen muss, was einen deutlichen Mehraufwand mit sich bringen würde.

Ein erfindungsgemäßes Projektierungswerkzeug 11 kann wie im Folgenden beschreiben verwendet werden: Ein erster Nutzer greift über den Engineering Station Client 14 auf das Projektierungswerkzeug 11 zu und erstellt sich in einer ersten Nutzersitzung eine erste (lokale) Kopie 13a einer zuvor von einem beliebigen Nutzer erstellten Stammprojektierung 12. Auf analoge Art und Weise erstellt ein zweiter Nutzer eine zweite lokale Kopie 13b. Dabei weist das Projektierungswerkzeug 11 einen Sicherheitsmechanismus auf, der verhindert, dass dem ersten Nutzer die Veränderung eines Bausteins, der zuvor von dem zweiten Nutzer verändert worden ist (bzw. umgekehrt), solange zu verweigern, bis der zweite Nutzer die an seiner zweiten Kopie 13b vorgenommene Änderung auf das Stammprojekt 12 übertragen hat und der erste Nutzer eine aktualisierte Kopie des Stammprojektes 12 als erste Kopie 13a verwendet.

Wenn nun der erste Nutzer eine Änderung an einem Baustein vorgenommen hat und diese Änderung durch einen Publish-Vorgang mit der Stammprojektierung 12 abgleicht, werden durch das Projektierungswerkzeug 11 die aktuellen Ladezustände der Bausteine der Stammprojektierung 12 in die Datenbank 16 übertragen. Diesen Ladezuständen, also den an die Datenbank 16 übertragenen Informationen, wird eine aktuelle Revisionsnummer des Stammprojektes 12 hinzugefügt. Dabei kann es sich um eine fortlaufende Nummerierung handeln. Das Projektierungswerkzeug 12 ist dabei dazu ausgebildet, veraltete, von dem ersten Nutzer oder dem zweiten Nutzer nicht mehr benötigte Informationen/Ladezustände, die zu einer Revisionsnummer der Stammprojektierung 12 gehören, welche von keinem der Nutzer mehr benötigt wird, aus der Datenbank 16 zu löschen. Dadurch kann die Datenbank 16 mit möglichst wenig Speicherbedarf auskommen und eine hohe Performanz aufweisen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Projektierungswerkzeug (11) für ein Leitsystem einer Prozess- oder Fertigungsanlage, welches Projektierungswerkzeug (11) auf einem Engineering Station Server (2) computerimplementierbar ist,
wobei durch das Projektierungswerkzeug (11) eine computerimplementierte Stammprojektierung (12) für eine Automatisierung der Prozess- oder Fertigungsanlage erstellbar und veränderbar ist, welche Stammprojektierung (12) eine Mehrzahl von computerimplementierten Bausteinen aufweist, die jeweils Automatisierungsinformationen für eine oder mehrere Komponenten der Prozess- oder Fertigungsanlage umfassen,
und wobei durch wenigstens einen ersten Nutzer eine erste Kopie (13a) und durch wenigstens einen zweiten Nutzer eine zweite Kopie (13b) der Stammprojektierung (12) in einer jeweiligen Nutzersitzung erstellbar und in der jeweiligen Nutzersitzung veränderbar sind,
wobei die Stammprojektierung (12) vollständig oder in Teilen kompilierbar und auf ein Automatisierungsgerät (4) der Prozess- oder Fertigungsanlage übertragbar ist,
**dadurch gekennzeichnet, dass**
das Projektierungswerkzeug (11) dazu ausgebildet ist, für jeden computerimplementierten Baustein Informationen darüber, ob der jeweilige Baustein der Stammprojektierung (12) zum Kompilieren und Übertragen vorgesehen ist oder ob der jeweilige Baustein der Stammprojektierung (12) bereits kompiliert und auf das Automatisierungsgerät (4) übertragen worden ist, von der Stammprojektierung (12) an eine Datenbank (16), die außerhalb der Stammprojektierung (12) und der Nutzersitzungen implementiert ist, zu übertragen,
wobei das Projektierungswerkzeug (11) dazu ausgebildet ist, die Informationen aus der Datenbank (16) in die jeweilige Nutzersitzung des ersten Nutzers und des zweiten Nutzers zu übertragen, um einen Abgleich zwischen der Datenbank (16) und den Nutzersitzungen zu bewirken, wobei das Projektierungswerkzeug (11) dazu ausgebildet ist, die Informationen dem ersten Nutzer und dem zweiten Nutzer jeweils innerhalb deren Nutzersitzung visuell darzubieten.

2. Projektierungswerkzeug (11) nach Anspruch 1, bei dem die Datenbank (16) auf dem Engineering Station Server (2) oder in einer cloudbasierten Umgebung implementierbar ist.

3. Projektierungswerkzeug (11) nach Anspruch 1 oder 2, das dazu ausgebildet ist, die Informationen dem jeweiligen Nutzer in Reaktion auf eine dahingehende Anforderung durch den jeweiligen Nutzer bereitzustellen.

4. Projektierungswerkzeug (11) nach einem der vorangegangenen Ansprüche, das dazu ausgebildet ist, die Informationen dem jeweiligen Nutzer in definierbaren zeitlichen Abständen automatisch bereitzustellen.

5. Projektierungswerkzeug (11) nach einem der vorangegangenen Ansprüche, das dazu ausgebildet ist, dem ersten Nutzer die Veränderung eines Bausteins, der zuvor von dem zweiten Nutzer verändert worden ist, solange zu verweigern, bis der zweite Nutzer die vorgenommene Änderung auf die Stammprojektierung (12) übertragen hat und der erste Nutzer eine aktualisierte Kopie der Stammprojektierung (12) als erste Kopie (13a) verwendet.

6. Projektierungswerkzeug (11) nach einem der vorangegangenen Ansprüche, das dazu ausgebildet ist, den in die Datenbank (16) zu übertragenden Informationen eine aktuelle Revisionsnummer der Stammprojektierung (12) hinzuzufügen, wobei das Projektierungswerkzeug (11) dazu ausgebildet ist, veraltete, nicht mehr benötigte Informationen aus der Datenbank (16) zu löschen.

7. Engineering Station Server (2) für ein Leitsystem einer Prozess- oder Fertigungsanlage, auf dem ein Projektierungswerkzeug (11) gemäß einem der Ansprüche 1 bis 6 computerimplementiert ist.

8. Leitsystem (1) für eine Prozess- oder Fertigungsanlage, welches wenigstens einen Engineering Station Server (2) gemäß Anspruch 7 und ein Automatisierungsgerät (4) umfasst.

9. Leitsystem (1) nach Anspruch 8, welches zusätzlich einen Operator Station Server (3) umfasst, auf dem ein Computer-Werkzeug zum Bedienen und Beobachten der automatisierten Prozess- oder Fertigungsanlage durch einen Operator implementiert ist.

10. Verwendung eines Projektierungswerkzeugs (11) gemäß einem der Ansprüche 1 bis 6 zum Erstellen einer Automatisierung für eine Prozess- oder Fertigungsanlage.

11. Verwendung gemäß Anspruch 9 und anschließendes Betreiben der Prozess- oder Fertigungsanlage auf Grundlage der erstellten Automatisierung.
